# EUROPEAN PATENT SPECIFICATION

(11) **EP 4 337 827 B1**
(45) Date of publication and mention of the grant of the patent: **26.02.2025**
(21) Application number: 22728177.1
(22) Date of filing: 09.05.2022
(51) Int. Cl.: D21H 19/82, B32B 27/10, B32B 29/00, D21H 27/10

(54) **A RECYCLABLE PAPER PACKAGING MATERIAL COMPRISING METALLIZED AND POLYMERIC BARRIER LAYERS ATTACHED BY A BINDER**
WIEDERVERWERTBARES PAPIERVERPACKUNGSMATERIAL MIT METALLISIERTEN UND POLYMEREN SPERRSCHICHTEN, DIE DURCH EIN BINDEMITTEL BEFESTIGT SIND
MATÉRIAU D'EMBALLAGE EN PAPIER RECYCLABLE COMPRENANT DES COUCHES BARRIÈRES MÉTALLISÉES ET POLYMÈRES FIXÉES PAR UN LIANT

(30) Priority: 12.05.2021 EP 21173477
(43) Date of publication of application: 20.03.2024
(73) Proprietor: Société des Produits Nestlé S.A., 1800 Vevey (CH)
(72) Inventor: VISHTAL, Alexey, 1000 Lausanne (CH); BHATTACHARYA, Abhijit, 1066 Epalinges (CH); ZEBOUDJ, Lise, 74500 Neuvecelle (FR)
(74) Representative: Navarro Fernández, Maria Isabel
(86) International application number: PCT/EP2022/062391
(87) International publication number: WO 2022/238280

(56) References cited:
- WO-A1-00/24967
- WO-A1-00/77300
- WO-A1-96/13380

## Description

### Field of the invention

The present invention concerns a packaging paper-based material having high barrier properties to moisture and oxygen, and being recyclable in the recycling paper stream.

### Background of the invention

Plastic packaging is used frequently in the economy and in people's daily lives. It has multiple advantages, such as its flexibility and its light weight. Such a weight reduction contributes to fuel saving and CO₂ reduction during transport, for example. Its barrier properties help to reduce food waste due a positive effect on increasing shelf life. The barrier properties also help to secure food safety.

However, according to the European strategy for plastics in a circular economy, recently published by the European Commission, around 25.8 million tons of plastic waste are generated in Europe every year with less than 30% of such waste being collected for recycling and between 150 000 to 500 000 tons of plastic waste entering the oceans every year.

To ensure that plastic waste is reduced, significant efforts are made in the industry and in commerce. Several supermarkets replace plastic bags by paper-based bags, for example. However, replacing plastics with paper in food packaging is not an easy task. A change in packaging material must not compromise consumer safety. The packaging must serve to protect the food but must also be robust enough to be handled by machines during the production process and must allow that the food product is presented effectively.

Hence, there is a need for paper-based materials with improved barrier properties. There is - in particular - a need for a paper-based material with improved barrier properties that can be recycled in conventional paper recycling processes.

Solutions have been developed which comprise metallizing paper to achieve a certain level of barrier against moisture or grease. Sometimes, a polymeric film layer is added by extrusion or lamination processes, in order to also achieve gas (especially oxygen) barrier properties. However, such polymers are deposited in thick layers, due to extrusion or lamination processes, which renders the material not recyclable with paper recycling processes due to the high contents of polymers.

Also, although current metallized barrier paper solutions may offer high levels of oxygen and water vapour barrier, they were found to lack robustness towards mechanical actions such as folding (when forming a package). Furthermore, such paper-based structures have been found to be subject to wrinkling as well, when submitted to extremely high levels of Relative Humidity.

There was therefore a need for a packaging material that is paper-based, that does not contain a high amount of polymeric material that would make it incompatible with paper recycling processes, and has excellent barrier against moisture and oxygen, while being resistant to mechanical stress, as encountered during packaging manufacturing processes.

It had been found that polyvinylidene chloride - or dichloride - (PVDC) was a very good barrier against oxygen in polymer film structures, while also providing excellent heat sealing capabilities because it does not substantially deteriorate when subject to heat generated by a sealing tool of the type used in packaging manufacturing processes. However, it had also been found that PVDC does not properly adhere to a metallic layer of aluminium in a multilayer structure, such that for a long time, it was commonly considered by skilled artisans that they should not associate a metal layer to PVDC in order to achieve a high barrier against both moisture and oxygen in a packaging.

WO 9211952 A1 in the name of the DUPONT de NEMOURS Company, discloses a metallized material having a metallic coating on one or more surfaces that shows improved barrier layer coating adhesion and heat seal properties. These materials include a coating of polyvinylidene copolymer of at least 80 % vinylidene chloride (PVDC), at least 4 % of an ethylenically unsaturated acrylic monomer, as well as coating additives for modifying film properties. PVDC achieves an excellent resistance to mechanical stress, while providing good oxygen barrier properties. In this patent publication, the inventors have found that by mixing PVDC with additives, they could achieve a reasonably good bond between the metallic layer and the PVDC oxygen-barrier layer. More precisely, the metallized materials described in WO'952 show improved barrier layer coating adhesion and heat seal properties as they are made by treating a substrate material (e.g. a paper) that has at least one metallic surface thereon, with a formulated solution of coating additives and vinylidene chloride copolymer. The polyvinylidene chloride copolymer comprises at least 80% by weight polyvinylidene chloride, at least 4% by weight of an ethylenically unsaturated acrylic ester.

Although the invention disclosed in WO 9211952 improves adhesion of PVDC to metal, we have now found that a major modification of the PVDC appears, due to the mixing of vinylidene chloride with the same additives that allow adhesion of the PVDC to the metal. This chemical modification leads to a substantial loss in the barrier properties of the PVDC. Prior art documents WO00/24967A1 and WO00/77300A1 relate to packaging laminates for food applications, comprising a paper layer, a metal layer and several polymeric layers. They do not comprise at least a top layer of pure PVDC.

Having considered the above, there is a need for a packaging material that is recyclable in a paper recycling process, that is metallized for high moisture barrier, and further comprises an additional layer for excellent oxygen barrier and heat seal properties, while avoiding the major drawbacks of the solutions already available.

### Summary of the invention

The objectives set out above are met with a barrier multilayer packaging material structure being formed as a flexible or semi-rigid unitary sheet and comprising from its outer surface to its inner surface, the following layers:
(i) a flexible or semi-rigid paper layer having a grammage of between 40 g/m² and 150 g/m²,
(ii) a pre-metallization layer located between the paper layer and the metal layer, said layer being present in an amount comprised within the range of 1 to 10 g/m²,
(iii) a thin metal layer selected within the list of: physical vapour deposition of aluminium having an optical density equivalent of 1.5 to 4, physical or chemical vapor deposition of aluminium oxide (AlOx) or silicon oxide (SiOx), said metal or oxide layer having a thickness comprised between 7 nm and 100 nm,
(iv) a polymeric binder selected from the list of: pure ethylene-acrylic acid, pure methacrylic acid copolymer, pure polyester, pure polyvinyl acetate, pure polyurethane, said binder being present in an amount comprised between 0.1 g/m² and 10 g/m²,
(v) a water resistant oxygen-barrier layer of pure polyvinylidene chloride (PVDC), in an amount of 4 g/m² to 20 g/m², preferably between 5 g/m² to 8 g/m².

Due to the fact that the PVDC layer is pure, its barrier and heat resistance capabilities are not modified and proved to be excellent, unlike prior art structures wherein the PVDC chemical structure was modified by additives. Furthermore, the presence of an intermediate binding layer between the metal and the PVDC layers was found to provide an excellent adhesion between these two layers. None of the solutions available in the known art was able to provide all such benefits at the same time.

The pre-metallization layer allows the metal layer to correctly adhere to the surface of the paper, especially as it smoothens the surface of the paper, and provides a chemically compatible interface for the metal atoms to be deposited.

By "inner side" of the packaging structure it is meant the side intended to face the filled food contents of a package produced from said packaging structure.

By "layer of pure polyvinylidene chloride (PVDC)", it is meant a layer made entirely of PVDC, such that said polymer is deprived of binders, fillers, and especially deprived of any other type of polymer or material.

By "layer of pure ethylene acrylic acid" or "pure" methacrylic acid, it is meant that said layer is entirely and exclusively constituted of, respectively, ethylene-acrylic acid or methacrylic acid, and especially that it contains only one type of polymer, and is deprived of any other type of polymer or ingredient.

The multi-layer metallized paper-based material according to the present invention can be recycled with other paper packaging materials in a regular paper recycling process, preferably in a process according to the according to PTS test method PTS-RH 021:2012 Category II. Such a possibility is due to the fact that, although it contains a certain amount of polymer (HDPE), this polymer is applied by a dispersion coating process.

Thanks to dispersion coating of the polymer layer, the overall thickness of polymer material in the structure is extremely reduced, compared to the thickness of paper material; therefore the inventors have achieved a packaging multilayer structure with excellent barrier properties against oxygen and moisture transfer, as well as resistance to liquid contact, while achieving a total contents of cellulosic fibres which is very high in proportion of the total material weight. Furthermore, dispersion coating of polymer avoids high cohesion and high adhesion of the polymer and therefore solves the recyclability problem (solid particles of polymer dispersed in a water carrier medium instead of liquid polymer applied to substrate). The fact that the inventors succeeded in forming a multilayer structure completely deprived of polymer layers formed by extrusion (extrusion-lamination or extrusion coating), provides a multilayer structure with a ratio of cellulosic fibre to non-cellulosic material, which is extremely high in fibre contents, and wherein the polymer layers are easy to disintegrate in the repulping process of paper recycling streams, due to the relatively low cohesion strength of the polymer, and also the relatively low adhesion of the same polymer to the rest of the substrate (especially the cellulosic fibres). The resulting structure therefore demonstrates excellent repulping capabilities and high fibre yield which allows it to be accepted in waste paper collection in most of the countries worldwide. The very low content of non-cellulosic polymer and metal materials vacuum deposited metal layer is easily disintegrated, dissolved and separated from the cellulose, unlike existing structures known from the art.

Advantageously, in the paper-based barrier multilayer structure according to the present invention, the total fiber contents of said structure is comprised between 85% and 95% by weight.

In one embodiment, the packaging structure further comprises an outermost coating layer comprising: an ink printing, an overprint varnish, said outermost layer being applied in an amount comprised between 0.1 g/m² and 6 g/m².

Preferably, the pre-metallization layer comprises an ingredient selected within the list of: ethylene acrylic acid copolymer, polyvinyl alcohol (PVOH), butenediol vinyl alcohol (BVOH) copolymer, nitrocellulose-propylene-acrylic acid copolymer, polyurethane, or a combination thereof.

In order to provide the packaging structure with a sufficiently low level of polymer contents, hence allowing recycling in a paper recycling process, the pre-metallization layer is preferably applied by a polymer dispersion coating process, more preferably using direct or reverse gravure application or semi-flexography process.

Optionally, the packaging structure of the invention can also advantageously comprise an innermost layer with a heat seal lacquer, a liquid-tight polyolefin dispersion coating, or a combination thereof, said innermost layer being present in an amount comprised between 1 and 10 g/m².

The present invention is further directed to a package made of a paper-based barrier multilayer structure as described above.

### Brief description of the drawings

Additional features and advantages of the present invention are described in, and will be apparent from, the description of the presently preferred embodiments which are set out below with reference to the drawings in which:
**Figure 1** is a schematic representation of a cross-section of a first embodiment of a multilayer barrier structure according to the invention;
**Figure 2** is a schematic representation of a cross-section of a second embodiment of a multilayer barrier structure according to the invention.

### Detailed description of the invention

Generally, in the present specification, by "extrusion coating", it is meant a method to provide a thick layer of polymer by using an extruder which forces melted thermoplastic resin (e.g. polyethylene) through a horizontal slot-die onto a moving web of substrate (e.g. paper). The resulting product is a permanently coated web structure.

By "extrusion lamination", it is meant a similar process to extrusion coating, whereby a polymer resin is extruded between two substrates (e.g. a layer of paper and another layer of polymeric film), and acts as a bonding agent.

By "adhesive lamination", it is meant a process whereby one paper material is coated with adhesive and laminated to a second paper or paperboard material.

In a lamination process, two thick layers of material are combined, either by extrusive lamination or adhesive lamination, whereby the thickness of each layer is far greater than the thickness obtained by dispersion coating.

By "dispersion coating" or "polymer dispersion coating", it is meant a coating technique whereby an aqueous dispersion of fine polymer particles or polymer solution is applied to the surface of paper or board as such, in order to form a solid, nonporous film after drying. Dispersion coating can be performed by gravure, flexo-gravure, rod, blade, slot-die, curtain air knife, or any other known method of paper coating. Dispersion coating can create a much thinner layer than extrusion, since the polymer is mixed in an aqueous water solution. This brings advantages in terms of quantity of polymer usage, its barrier performance and recyclability of resulting paper structure. The target of dispersion coating is to achieve a barrier layer against water, water vapour, grease, oil, gas, etc. by environmentally friendly coating. Another target is to prepare surface of cellulosic material for a vacuum deposition process

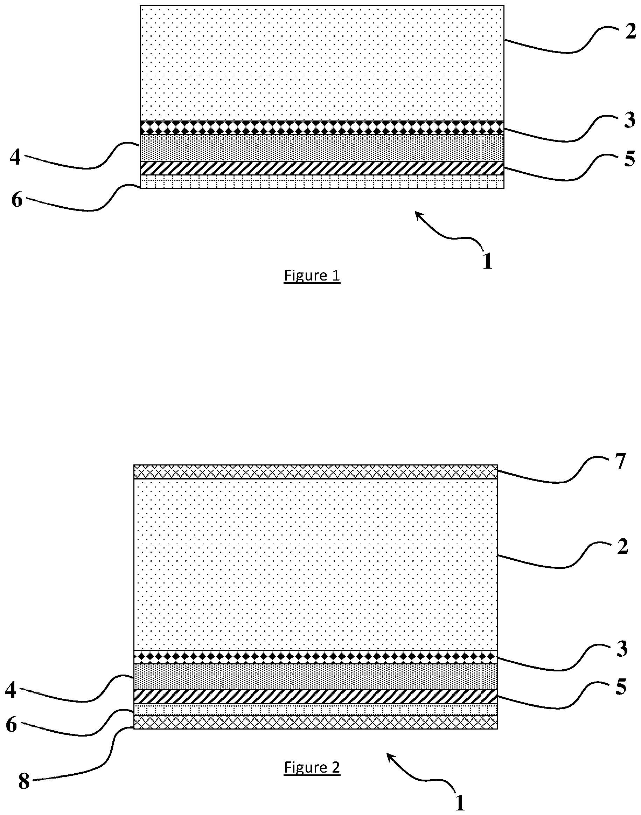

In **figure 1** is illustrated a first embodiment of the invention. In this figure is shown a multilayer structure 1 comprising the several layers, described in the following, starting from the outer layer (i.e. the layer which is in contact with outside atmosphere, once said structure is formed into a package), then towards the inner layer (i.e. the layer that will eventually be in contact with the packed product, once said structure is formed into a package).

In this first embodiment of a structure 1 according to the invention, as illustrated in **figure 1****,** the first - outermost - layer 2 is a flexible or semi-rigid paper layer having a grammage of 80 g/m². The paper is an uncoated woodfree supercalendered kraft paper obtained from the UPM Company.

Then, the paper-based barrier multilayer structure 1 further comprises a pre-metallization layer 3 of butenediol vinyl alcohol (BVOH) copolymer, located between the paper layer 2 and the next layer which is a vacuum deposited metal layer 4, said pre-metallization layer 3 being applied by polymer dispersion coating, in an amount of about 3 g/m².

Then, the pre-metallization layer 3 is metallized with a thin metal layer 4 which is a physical vapour deposition of aluminium having an optical density equivalent of 3, said aluminium layer having a thickness of about 45 nm.

Then, the inner side of the aluminium layer 4 is coated with a polymeric adhesion primer coating 5 comprising a water-based dispersion of polyester, said primer (also named "binder" in the rest of this specification) being applied in an amount of about 2 g/m² by a dispersion coating process.

Finally, the innermost layer of the structure 1 according to this first embodiment, is a water resistant oxygen-barrier layer 6 of pure polyvinylidene chloride (PVDC), being applied in an amount of about 8 g/m² and which is deposited by a polymer dispersion coating process using direct gravure application.

In a second embodiment of a structure 1 according to the invention, as illustrated in **figure 2****,** the structure is similar to that of the first embodiment described above in relation to figure 1. However, in this embodiment, the paper-based barrier multilayer structure 1 further comprises an outermost coating layer 7 comprising an ink printing and an over-print varnish in an amount of about 5 g/m². On the innermost side of the material structure, the PVDC layer serves as a heat seal lacquer in case the material requires sealing in a heat sealing process, in particular for manufacturing a package therefrom.

The flexible packaging material structure of the present invention is designed to be formed into a packaging material for a food product. It is preferably a primary packaging material, but can also be used to manufacture a secondary packaging material or a tertiary packaging material. A primary packaging material for a food product is in direct contact with the actual food product. A secondary packaging material for a food product may be a packaging material for a food product that helps secure one or more food products contained in a primary packaging. Secondary packaging material is typically used when multiple food products are provided to consumers, each individually packed in a single container. A tertiary packaging material for a food product is a packaging material for a food product that helps secure one or more food products contained in a primary packaging and/or in a primary and secondary packaging during transport.

## Claims

1. A barrier multilayer packaging material structure (1) being formed as a flexible or semi-rigid unitary sheet and comprising from its outer surface to its inner surface, the following layers:
(i) a flexible or semi-rigid paper layer (2) having a grammage of between 40 g/m² and 150 g/m²,
(ii) a pre-metallization layer (3) located between the paper layer (2) and a metal layer (4), said pre-metallization layer (3) being present in an amount comprised within the range of 1 to 10 g/m²,
(iii) a thin metal layer (4) selected within the list of: physical vapour deposition of aluminium having an optical density equivalent of 1.5 to 4, physical or chemical vapor deposition of aluminium oxide (AlOx) or silicon oxide (SiOx), said metal or oxide layer having a thickness comprised between 7 nm and 100 nm,
(iv) a polymeric binder (5) selected from the list of: pure ethylene-acrylic acid, pure methacrylic acid copolymer, pure polyester, pure polyvinyl acetate, pure polyurethane, said binder being present in an amount comprised between 0.1 g/m² and 10 g/m²,
(v) a water resistant oxygen-barrier layer (6) of pure polyvinylidene chloride (PVDC), in an amount of 4 g/m² to 20 g/m², preferably between 5 g/m² to 8 g/m².

2. A paper-based barrier multilayer structure (1) according to claim 1, wherein the total fiber contents of said structure is comprised between 85% and 95% by weight.

3. A paper-based barrier multilayer structure (1) according to any one of preceding claims 1 or 2, which further comprises an outermost coating layer (7) comprising: an ink printing, an overprint varnish, said outermost layer being applied in an amount comprised between 0.1 g/m² and 6 g/m².

4. A paper-based barrier multilayer structure (1) according to any one of the preceding claims, wherein the pre-metallization layer (3) comprises an ingredient selected within the list of: ethylene acrylic acid copolymer, polyvinyl alcohol (PVOH), butenediol vinyl alcohol (BVOH) copolymer, nitrocellulose-propylene-acrylic acid copolymer, polyurethane, or a combination thereof.

5. A paper-based barrier multilayer structure (1) according to any one of the preceding claims, wherein said pre-metallization layer (3) is applied by a polymer dispersion coating process.

6. A paper-based barrier multilayer structure (1) according to any one of the preceding claims 1 to 5, which further comprises an innermost layer (8) comprising a heat seal lacquer, a liquid-tight polyolefin dispersion coating, or a combination thereof, said innermost layer (8) being present in an amount comprised between 1 and 10 g/m².

7. A package made of a paper-based barrier multilayer structure according to any one of the preceding claims 1 to 6.

## Patentansprüche

1. Barriere-Mehrschicht-Verpackungsmaterialstruktur (1), die als eine flexible oder halbstarre einheitliche Folie ausgebildet ist und umfassend von ihrer Außenoberfläche bis zu ihrer Innenoberfläche die folgenden Schichten:
(i) eine flexible oder halbstarre Papierschicht (2), die ein Flächengewicht zwischen 40 g/m² und 150 g/m² aufweist,
(ii) eine Vormetallisierungsschicht (3), die sich zwischen der Papierschicht (2) und einer Metallschicht (4) befindet, wobei die Vormetallisierungsschicht (3) in einer Menge, die innerhalb des Bereichs von 1 bis 10 g/m² liegt, vorhanden ist,
(iii) eine dünne Metallschicht (4), ausgewählt aus der Liste von: physikalischer Aufdampfung von Aluminium, aufweisend eine optische Dichte von 1,5 bis 4, physikalischer oder chemischer Aufdampfung von Aluminium (AlOx) oder Siliziumoxid (SiOx), wobei die Metall- oder Oxidschicht eine Dicke, die zwischen 7 nm und 100 nm liegt, aufweist,
(iv) ein polymeres Bindemittel (5), ausgewählt aus der Liste von: reiner Ethylen-Acrylsäure, reinem Methacrylsäure-Copolymer, reinem Polyester, reinem Polyvinylacetat, reinem Polyurethan, wobei das Bindemittel in einer Menge, die zwischen 0,1 g/m² und 10 g/m² liegt, vorhanden ist,
(v) eine wasserbeständige Sauerstoffbarriereschicht (6) aus reinem Polyvinylidenchlorid (PVDC) in einer Menge von 4 g/m² bis 20 g/m², vorzugsweise zwischen 5 g/m² bis 8 g/m².

2. Barriere-Mehrschichtstruktur (1) auf Papierbasis nach Anspruch 1, wobei der Gesamtfasergehalt der Struktur zwischen 85 Gew.-% und 95 Gew.-% liegt.

3. Barriere-Mehrschichtstruktur (1) auf Papierbasis nach einem der vorstehenden Ansprüche 1 oder 2, die ferner eine äußerste Beschichtungsschicht (7) umfasst, umfassend: einen Tintendruck, einen Überdrucklack, wobei die äußerste Schicht in einer Menge, die zwischen 0,1 g/m² und 6 g/m² liegt, aufgetragen wird.

4. Barriere-Mehrschichtstruktur (1) auf Papierbasis nach einem der vorstehenden Ansprüche, wobei die Vormetallisierungsschicht (3) einen Bestandteil umfasst, ausgewählt aus der Liste von: Ethylen-Acrylsäure-Copolymer, Polyvinylalkohol (PVOH), Butendiol-Vinylalkohol-Copolymer (BVOH-Copolymer), Nitrocellulose-Propylen-Acrylsäure-Copolymer, Polyurethan oder einer Kombination davon.

5. Barriere-Mehrschichtstruktur (1) auf Papierbasis nach einem der vorstehenden Ansprüche, wobei die Vormetallisierungsschicht (3) durch ein Polymerdispersionsbeschichtungsverfahren aufgetragen wird.

6. Barriere-Mehrschichtstruktur (1) auf Papierbasis nach einem der vorstehenden Ansprüche 1 bis 5, die ferner eine innerste Schicht (8) umfasst, umfassend einen Heißsiegellack, eine flüssigkeitsdichte Polyolefin-Dispersionsbeschichtung oder eine Kombination davon, wobei die innerste Schicht (8) in einer Menge, die zwischen 1 und 10 g/m² liegt, vorhanden ist.

7. Verpackung, hergestellt aus einer Barriere-Mehrschichtstruktur auf Papierbasis nach einem der vorstehenden Ansprüche 1 bis 6.

## Revendications

1. Structure de matériau d'emballage multicouche à barrière (1) étant formée comme une feuille unitaire souple ou semi-rigide et comprenant, de sa surface extérieure à sa surface intérieure, les couches suivantes :
(i) une couche de papier souple ou semi-rigide (2) ayant un grammage compris entre 40 g/m² et 150 g/m²,
(ii) une couche de prémétallisation (3) située entre la couche de papier (2) et une couche de métal (4), ladite couche de prémétallisation (3) étant présente en une quantité comprise entre 1 et 10 g/m²,
(iii) une fine couche métallique (4) choisie dans la liste suivante : dépôt physique en phase vapeur d'aluminium ayant une densité optique équivalente de 1,5 à 4, dépôt physique ou chimique en phase vapeur d'oxyde d'aluminium (AIOx) ou d'oxyde de silicium (SiOx), ladite couche de métal ou d'oxyde ayant une épaisseur comprise entre 7 nm et 100 nm,
(iv) un liant polymère (5) choisi dans la liste suivante : acide éthylène-acrylique pur, copolymère d'acide méthacrylique pur, polyester pur, acétate de polyvinyle pur, polyuréthane pur, ledit liant étant présent en une quantité comprise entre 0,1 g/m² et 10 g/m²,
(v) une couche de barrière d'oxygène résistante à l'eau (6) de chlorure de polyvinylidène pur (PVDC), en une quantité comprise entre 4 g/m² et 20 g/m², de préférence entre 5 g/m² et 8 g/m².

2. Structure multicouche à barrière à base de papier (1) selon la revendication 1, dans laquelle la teneur totale en fibres de ladite structure est comprise entre 85 % et 95 % en poids.

3. Structure multicouche à barrière à base de papier (1) selon l'une quelconque des revendications précédentes 1 ou 2, qui comprend en outre une couche de revêtement extérieure (7) comprenant : une impression à l'encre, un vernis de surimpression, ladite couche extérieure étant appliquée en une quantité comprise entre 0,1 g/m² et 6 g/m².

4. Structure multicouche à barrière à base de papier (1) selon l'une quelconque des revendications précédentes, dans laquelle la couche de prémétallisation (3) comprend un ingrédient choisi dans la liste suivante : copolymère d'éthylène et d'acide acrylique, alcool polyvinylique (PVOH), copolymère de butènediol et d'alcool vinylique (BVOH), copolymère de nitrocellulose et d'acide acrylique et de propylène, polyuréthane, ou une combinaison de ceux-ci.

5. Structure multicouche à barrière à base de papier (1) selon l'une quelconque des revendications précédentes, dans laquelle la couche de prémétallisation (3) est appliquée par un procédé de revêtement par dispersion de polymères.

6. Structure multicouche à barrière à base de papier (1) selon l'une quelconque des revendications précédentes 1 à 5, qui comprend en outre une couche intérieure (8) comprenant une laque thermoscellée, une couche de dispersion de polyoléfine étanche aux liquides, ou une combinaison de celles-ci, ladite couche intérieure (8) étant présente en une quantité comprise entre 1 et 10 g/m².

7. Emballage constitué d'une structure multicouche à barrière à base de papier selon l'une quelconque des revendications précédentes 1 à 6.
